# EUROPEAN PATENT APPLICATION

(11) **EP 4 838 578 A1**
(43) Date of publication of application: **11.11.2026**
(21) Application number: 26174465.0
(22) Date of filing: 24.04.2026
(51) Int. Cl.: H01M 4/525, C01G 53/50, H01M 4/36, H01M 4/131, H01M 4/1391, H01M 10/0525, H01M 4/02

(54) **POSITIVE ELECTRODES AND RECHARGEABLE LITHIUM BATTERIES**

(30) Priority: 07.05.2025 KR 20250059302
(71) Applicant: SAMSUNG SDI CO., LTD., Yongin-si, Gyeonggi-do 17084 (KR)
(72) Inventor: YOON, Jaesang, 17084 Yongin-si (KR); KANG, Seok Mun, 17084 Yongin-si (KR); KIM, Young-Ki, 17084 Yongin-si (KR); JEONG, Jaeyoung, 17084 Yongin-si (KR); KIM, Jihyeun, 17084 Yongin-si (KR); KIM, Eugene, 17084 Yongin-si (KR)
(74) Representative: Maiwald GmbH

(57) **Abstract**

A positive electrode includes a positive electrode current collector and a positive electrode active material layer on the positive electrode current collector. The positive electrode active material layer includes a first positive electrode active material including a first lithium nickel-based composite oxide in a form of secondary particles that are agglomerations of primary particles, and a coating layer disposed on each of the secondary particles, and with the coating layer including one or more of Al, B, Co, Mg, Mn, Mo, Nb, Si, Sn, Ti, V, W, Y, Zn, and Zr; and a second positive electrode active material including a second lithium nickel-based composite oxide in a form of single particles. An average particle diameter (D₅₀) of the secondary particles of the first positive electrode active material is greater than an average particle diameter (D₅₀) of the single particles of the second positive electrode active material. Based on a total of 100 wt% of the first positive electrode active material and the second positive electrode active material, the first positive electrode active material is included in an amount of 5 wt% to 30 wt%, and the second positive electrode active material is included in an amount of 70 wt% to 95 wt%. A proportion of the first positive electrode active material having cracks is low.

## Description

### BACKGROUND

### 1. Field

Positive electrodes and rechargeable lithium batteries are disclosed.

### 2. Description of the Related Art

Portable information devices such as cell phones, laptops, smart phones, and the like use rechargeable lithium batteries as power sources. Electric vehicles use rechargeable lithium batteries having high energy density and easy portability as driving power sources. To this end, further research has been conducted in using rechargeable lithium batteries with high energy density as driving power sources for hybrid or electric vehicles or power storage power sources.

Various positive electrode active materials have been investigated for use in rechargeable lithium batteries. With the recent rapidly increasing demand for high capacity or high-energy-density rechargeable lithium batteries, there is a need to develop positive electrode active materials that have increased capacity, while ensuring stability of the batteries and enabling operation at high voltages.

### SUMMARY

A positive electrode and a rechargeable lithium battery with improved high-temperature and high-voltage characteristics are provided, with the battery having high capacity being economic to manufacture.

In some embodiments, a positive electrode includes a positive electrode current collector and a positive electrode active material layer on the positive electrode current collector, wherein the positive electrode active material layer includes a first positive electrode active material including a first lithium nickel-based composite oxide in a form of secondary particles that are agglomerations of primary particles, with a coating layer disposed on each of the secondary particles, and with the coating layers including one or more of Al, B, Co, Mg, Mn, Mo, Nb, Si, Sn, Ti, V, W, Y, Zn, and Zr, and a second positive electrode active material including a second lithium nickel-based composite oxide and in a form of single particles, an average particle diameter (D₅₀) of the secondary particles of the first positive electrode active material is greater than an average particle diameter (D₅₀) of the single particles of the second positive electrode active material, based on a total of 100 wt% of the first positive electrode active material and the second positive electrode active material, the first positive electrode active material is included in an amount of about 5 wt% to about 30 wt%, and the second positive electrode active material is included in an amount of about 70 wt% to about 95 wt%, and a proportion of the first positive electrode active material having a crack rate of greater than or equal to about 60% in Equation 1 is less than 30% by number based on 100% by number of the total first positive electrode active material. [Equation 1] $Crack rate = \left(P-{P}_{0}\right) / {P}_{0} \times 100$ where in Equation 1, P₀ is obtained by selecting a secondary particle of the first positive electrode active material in a SEM image of a cross-section of the positive electrode, calculating the cross-sectional area of the secondary particle, and calculating the theoretical circumference therefrom, and P is obtained by selecting a secondary particle of the first positive electrode active material in the SEM image of the positive electrode cross-section, and adding the inner circumference due to the crack to the outer circumference of the positive electrode active material to calculate an actual circumference.

In some example embodiments, a rechargeable lithium battery including the positive electrode, a negative electrode, and an electrolyte is provided.

According to some embodiments, a positive electrode includes a positive electrode active material including a layered lithium nickel-based composite oxide and may have high capacity while being economically feasible, has excellent cycle-life characteristics under high-voltage and high-temperature driving conditions, has a low resistance change rate, generates little gas during high temperature storage, and has a high capacity recovery rate.

### BRIEF DESCRIPTION OF THE DRAWINGS

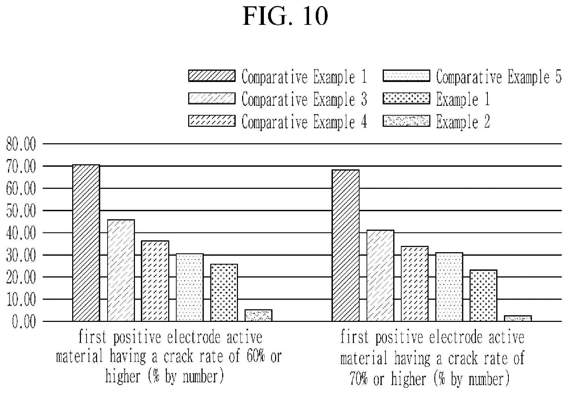

FIGS. 1 to 4 are schematic views showing rechargeable lithium batteries according to embodiments of the present disclosure.
FIG. 5 is a scanning electron microscopy (SEM) image (top) of a cross-section of a positive electrode according to Example 1 after compressing, and an image (bottom) in which only secondary particles corresponding to the first positive electrode active material are shown using an image analysis program.
FIG. 6 is a SEM image (top) of a cross-section of a positive electrode according to Example 2 after compressing, and an image (bottom) in which only secondary particles corresponding to the first positive electrode active material are shown using an image analysis program.
FIG. 7 is an SEM image (top) of the cross-section of the positive electrode according to Comparative Example 3 after compressing, and an image (bottom) in which only the secondary particles corresponding to the first positive electrode active material are showing using an image analysis program.
FIG. 8 is an SEM image (top) of the cross-section of the positive electrode according to Comparative Example 4 after compressing, and an image (bottom) in which only the secondary particles corresponding to the first positive electrode active material are shown using an image analysis program.
FIG. 9 is an SEM image (top) of the cross-section of the positive electrode according to Comparative Example 5 after compressing, and an image (bottom) in which only the secondary particles corresponding to the first positive electrode active material are shown using an image analysis program.
The left side of FIG. 10 is a graph showing the proportion of the first positive electrode active material having a crack rate of greater than or equal to about 60% for total secondary particles captured on the compressed positive electrode cross-sections of Example 1, Example 2, Comparative Example 1, and Comparative Examples 3 to 5, and the right side of FIG. 10 is a graph showing the proportion of the first positive electrode active material having a crack rate of greater than or equal to about 70% for total secondary particles captured on the compressed positive electrode cross-sections of Example 1, Example 2, Comparative Example 1, and Comparative Examples 3 to 5.

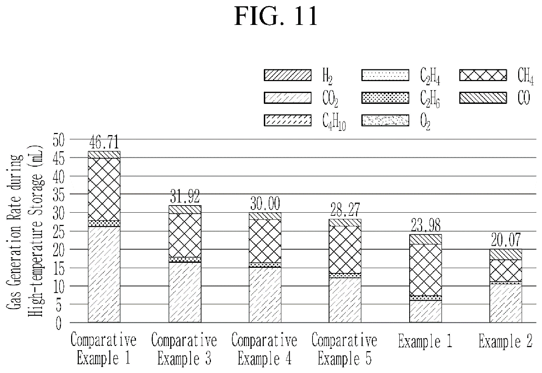

FIG. 11 is a graph showing the amounts of gas generated by the rechargeable lithium battery cells of Example 1, Example 2, Comparative Example 1, and Comparative Examples 3 to 5 after storage at 60 °C for 60 days.

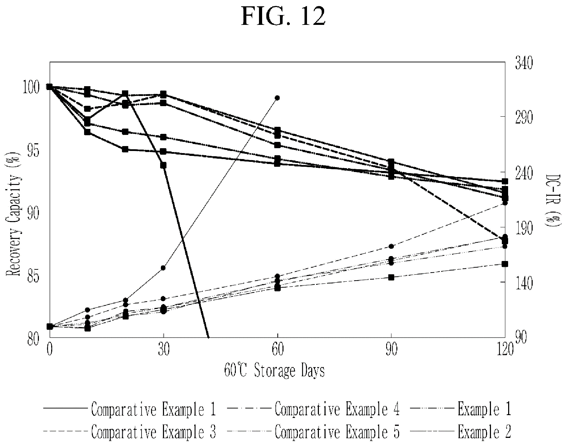

FIG. 12 is a graph showing the capacity recovery rate (left vertical axis, thick upper graphs) and DC-IR change rate (right vertical axis, thin lower graphs) according to the number of days of storage at 60 °C for the rechargeable lithium battery cells of Example 1, Example 2, Comparative Example 1, and Comparative Examples 3 to 5.

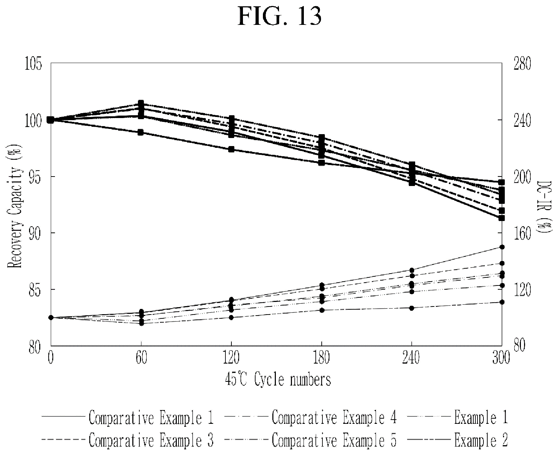

FIG. 13 is a graph showing the results of high-temperature cycle-life characteristics at 45 °C for the rechargeable lithium battery cells of Example 1, Example 2, Comparative Example 1, and Comparative Examples 3 to 5, showing the capacity retention rate (left vertical axis, thick upper graphs) and DC-IR change rate (right vertical axis, thin lower graphs) according to the number of cycles.

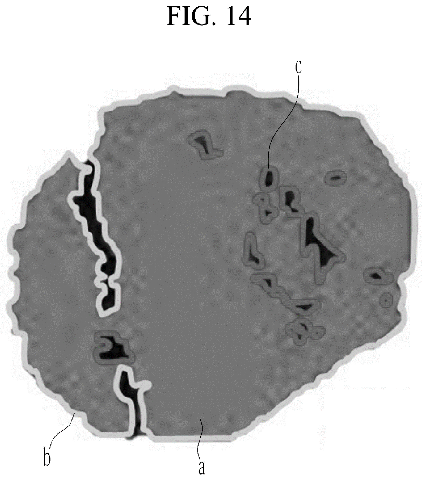

FIG. 14 is an image to explain the crack rate calculation method of Equation 1 and shows an image in which one secondary particle, which is the first positive electrode active material, is selected using an image analysis program from an SEM image of the positive electrode cross-section.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Terms such as "comprises," "includes," or "have" designate the presence of an embodied feature, number, step, element, or a combination thereof, but do not preclude the possibility of the presence or addition of one or more other features, numbers, steps, elements, or a combination thereof.

The thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" as used herein includes not only a shape formed on the whole surface when viewed from a plan view, but also a shape formed on a partial surface.

Average particle diameter may be measured by methods well known to those skilled in the art, for example, by backscatter electron diffraction, by a particle size analyzer, or by transmission electron microscope images or scanning electron microscope images. Alternatively, it is possible to obtain an average particle diameter value by measuring using a dynamic light scattering method, performing data analysis, counting the number of particles for each particle size range, and calculating the average particle diameter from this.

Herein, "or" is not to be construed as an exclusive meaning, for example, "A or B" is construed to include A, B, A+B, and the like.

"Metal" includes ordinary metals, transition metals and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements groups 1 and 2 excluding H (but including Be) are regarded as representing metals.

The secondary particle may refer to a particle in which more than 10 primary particles are agglomerated to form a distinct particle shape. For example, the secondary particle may be an agglomerate of 50 to several hundred primary particles. Such a structure typically arises when a layered nickel-based positive electrode active material is synthesized via coprecipitation. In contrast, a single particle, as described below, contains no internal grain boundaries and constitutes a single body. Whether a particle is secondary or single can be readily determined through SEM or TEM images of the surface or cross-section of the positive electrode active material.

### Positive Electrode

A positive electrode active material including a layered lithium nickel-based composite oxide may be capable of providing high capacity and high performance and is commercially available. However, for price competitiveness while maintaining performance, research has been conducted toward reducing nickel and reducing or omitting cobalt, which are expensive and/or have a limited reserve. Such a low-cobalt or cobalt-free layered nickel-based positive electrode active material requires a high voltage design to provide high energy density, but such designs may have a problem of severe structural change at the high voltage due to characteristics of its layered structure, deteriorating structural stability and thermal stability, with the result being deteriorated initial efficiency and cycle-life in batteries. Accordingly, there is a need to improve the performance and stability of the positive electrode active material having a low-cobalt or cobalt-free layered nickel-based composition under high-voltage and high-temperature conditions.

In addition, a positive electrode active material having a low-cobalt or cobalt-free layered nickel-based composition in the form of secondary particles that are agglomerations of primary particles continuously undergoes volume changes during the compression process in manufacturing a positive electrode and during charging and discharging, which may accumulate stress within the secondary particles and thereby cause microcracks at the grain boundaries. As a result, an electrolyte solution may penetrate into the secondary particles, which accelerates side reactions between secondary particles and electrolyte solution, which thereby increases resistance and deteriorates cycle-life characteristics of batteries.

Some embodiments of the present disclosure provide a positive electrode design that ensures high stability under high-temperature and high-voltage driving conditions to achieve less gas generation, a low resistance change rate, a high capacity recovery rate, and excellent cycle-life characteristics under the high-temperature and high-voltage driving condition.

According to some embodiments, a positive electrode includes a positive electrode current collector and a positive electrode active material layer on the positive electrode current collector. The positive electrode active material layer includes a first positive electrode active material including a first lithium nickel-based composite oxide, and including secondary particles that are agglomerations of primary particles and coating layers disposed on the secondary particles and including one or more of Al, B, Co, Mg, Mn, Mo, Nb, Si, Sn, Ti, V, W, Y, Zn, and Zr, and a second positive electrode active material comprising a second lithium nickel-based composite oxide and in a form of single particles. An average particle diameter (D₅₀) of the secondary particles of the first positive electrode active material is greater than an average particle diameter (D₅₀) of the single particles of the second positive electrode active material. In addition, based on a total of 100 wt% of the first positive electrode active material and the second positive electrode active material, the first positive electrode active material is included in an amount of about 5 wt% to about 30 wt% and the second positive electrode active material is included in an amount of about 70 wt% to about 95 wt%.

A proportion of the first positive electrode active material in the positive electrode having a crack rate of greater than or equal to about 60% according to Equation 1 below is less than 30% by number based on a total 100% by number of the first positive electrode active material.

"Less than 30% by number" denotes the number-based percentage of particles exhibiting a crack rate of 60% or higher, as determined from SEM images of the positive electrode cross-section. For example, one counts the total number of first positive electrode active material particles in these images, identifies those with a crack rate of at least 60%, and then calculates the ratio of that count to the total particle count, multiplied by 100. The term "% by number" may also be referred to as number fraction, numerical proportion, quantitative percentage, or particle number ratio, and may be expressed as "number %" or simply "%." [Equation 1] $Crack rate = \left(P-{P}_{0}\right) / {P}_{0} \times 100$ where, in Equation 1, P₀ is obtained by selecting one secondary particle of the first positive electrode active material from an SEM image of a cross-section of the positive electrode, calculating the cross-sectional area of the secondary particle, and calculating the theoretical circumference therefrom, and P obtained by selecting one secondary particle of the first positive electrode active material from the SEM image of the cross-section of the positive electrode and adding the inner circumference due to the crack to the outer circumference of the first positive electrode active material (i.e., the secondary particle) to calculate an actual circumference.

Here, a cross-section of the positive electrode refers to a cross-section of the positive electrode that is compressed until the positive electrode active material layer has a density of about 3.2 g/cc to about 3.6 g/cc. In general, a positive electrode is made by coating a composition for forming a positive electrode active material layer on a positive electrode current collector and then drying and compressing the positive electrode current collector. A cross-section of the positive electrode may be obtained by etching the compressed positive electrode in a method such as ion milling and the like. The ion milling may be, for example, broad ion beam milling. The crack rate according to Equation 1 indicates a degree to which cracks occur in the first positive electrode active material due to the compression of the positive electrode.

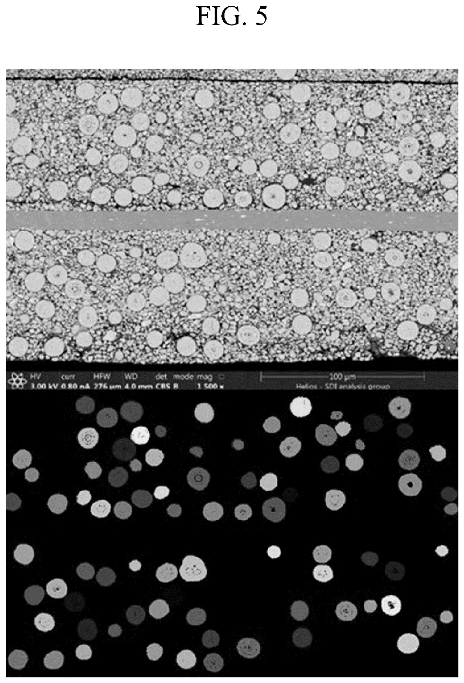

The crack rate may be calculated, for example, by (i) taking an image of the positive electrode cross-section with SEM to obtain a top image as shown in FIG. 5, (ii) removing the single particles of the second positive electrode active material to display the first positive electrode active material alone by using an image analysis tool (e.g., Avizo software program, Thermo Fisher Scientific Inc.) as the bottom image of FIG. 5, (iii) obtaining a cross-sectional area a excluding a cracked area in a cross-section of one secondary particle, as shown in FIG. 14, and a theoretical circumference (P₀) therefrom by using the image analysis tool, (iv) measuring an outer circumference b including the cracked area in the one secondary particle and a circumference c of the cracked area inside the particle by using the image analysis tool to obtain a sum of "b+c" as an actual circumference (P), and then (v) substituting P₀ and P into Equation 1. Subsequently, all the secondary particles in the SEM image of the positive electrode cross-section may be measured with respect to the crack rate in this way, and a ratio of the secondary particles with the crack rate of about 60% or higher is obtained.

In the step (iii), the theoretical circumference (P₀) in the cross-section (a) may be calculated according to "P₀ = 2(πa)^{1/2}", for example, assuming that the cross-section is circular, by using the image analysis tool.

In Equation 1, the actual circumference (P) of the secondary particle is a circumference of the particle including the cracked area, and as shown in FIG. 14. This concept includes the circumference (b) of the outer surface of the particle, which is indicated by light gray in the cross-section of the secondary particle shown in FIG. 14, and the circumference (c) of the crack inside the particle, which is marked by dark gray in FIG. 14. In Fig. 14, b may indicate the outer circumference, and c the inner circumference.

In the step (i), the cross-sectional area in the SEM image of the positive electrode may be, for example, about 10,000 µm² to about 100,000 µm², or about 40,000 µm² to about 80,000 µm². In the positive electrode cross-section, the total number of secondary particles of the first positive electrode active material may be, for example, about 20 to about 200, about 30 to about 150, or about 30 to about 100. The SEM image of the positive electrode cross-section may be at approximately 1,000 to 10,000 magnification, or 1,500 to 5,000 magnification.

In the step (ii), an aggregation of more than ten primary particles forming a distinguishable particle in the SEM image may be defined as a secondary particle. The positive electrode, which includes the first positive electrode active material in the form of secondary particles as large particles and the second positive electrode active material in the form of single particles as small particles, may maximize capacity and provide long cycle-life characteristics. In general, as described above, a positive electrode is made by coating a positive electrode composition including a positive electrode active material on a current collector and then drying and compressing the current collector. However, while compressing the positive electrode including these large and small particles, the large particles in the form of the secondary particles may be broken, cracked, or damaged on their surfaces. As a battery including the positive electrode is repeatedly charged and discharged, the deterioration of the large particles may be accelerated, which may further accelerate the side reactions of the large particles and the electrolyte solution and thereby lead to deterioration of cycle-life characteristics. Some embodiments of the present disclosure control each composition, size, shape, coating, mixing ratio, density, etc. of the large particles and the small particles to minimize cracks and deterioration of the large particles.

Equation 1 may be interpreted as a rate of increased circumference by the cracks according to a theoretical circumference of the secondary particles of the first positive electrode active material. That is, a circumference increase rate of the secondary particles and also be understood to be in line with an increase rate of the surface area of the particles. Accordingly, the calculation of Equation 1 may be used as an indicator of a degree of the cracks of the first positive electrode active material. Based on a single secondary particle, the more cracks in the secondary particle, the longer circumference and the larger surface area of the secondary particle, and accordingly, the higher circumference increase rate and the higher cracking degree. Based on the entire positive electrode, the more secondary particles having a high circumference increase rate (e.g., circumference increase rate of greater than or equal to about 60% or greater than or equal to about 70%), the higher crack generation rate. Here, the particles with a circumference increase rate of greater than or equal to about 60% may be defined as secondary particles having cracks.

According to some embodiments, based on a positive electrode active material layer having density (i.e., mixture density) of about 3.2 g/cc to about 3.6 g/cc, a positive electrode including less than 30% of the first positive electrode active material having a crack rate of greater than or equal to about 60% according to Equation 1 when stored at a high temperature of about 60 °C, has reduced gas generation amount, and a resistance change rate is lowered. Further, under the high-temperature and high-voltage conditions such as about 45 °C and a charge upper limit voltage of about 4.4 V, a capacity recovery rate is increased, cycle-life characteristics are improved, and a resistance change rate is lowered.

As compared to a positive electrode including a high nickel-based positive electrode active material containing cobalt, a positive electrode according to embodiments of the present disclosure may be made with less cost by reducing nickel and cobalt contents. Further, the positive electrode may provide for increased energy density and improved electrochemical performance by improving performance at high voltages and the high temperatures.

A proportion of the first positive electrode active material having a crack rate of greater than or equal to about 60% in Equation 1 may be for example about 1% by number to about 29% by number, about 1% by number to about 28% by number, about 1% by number to about 26% by number, about 3% by number to about 26% by number, or about 5% by number to about 26% by number based on 100% by number of the total first positive electrode active material. If these ranges are satisfied, a crack occurrence rate of the first positive electrode active material in the positive electrode is low, and the performance of the battery under high-temperature and high-voltage conditions may be dramatically improved.

A proportion of the first positive electrode active material having a crack rate of greater than or equal to about 70% in Equation 1 may be less than about 25% by number, for example, about 1% by number to about 24.5% by number, about 1% by number to about 24% by number, about 1% by number to about 23.5% by number, or about 2% by number to about 23% by number based on 100% by number of the total first positive electrode active material. If these ranges are satisfied, a crack occurrence rate of the first positive electrode active material in the positive electrode is low, and the performance of the battery under high-temperature and high-voltage conditions may be dramatically improved.

In some examples, based on a total of 100 wt% of the first positive electrode active material and the second positive electrode active material, the positive electrode may include about 5 wt% to about 20 wt% of the first positive electrode active material and about 80 wt% to about 95 wt% of the second positive electrode active material. In further examples, based on a total of 100 wt% of the first positive electrode active material and the second positive electrode active material, the positive electrode may include about 5 wt% to about 10 wt% of the first positive electrode active material and about 90 wt% to about 95 wt% of the second positive electrode active material. In these ranges, the crack rate of the first positive electrode active material may be more significantly reduced such that a proportion of the first positive electrode active material having a crack rate of greater than or equal to about 60% calculated by Equation 1 may be less than about 10% by number, for example, about 1% to about 8% by number, about 1% to about 6% by number, or about 1% to about 5.5% by number based on 100% by number of the total first positive electrode active material. Further, a proportion of the first positive electrode active material having a crack rate of greater than or equal to about 70% in Equation 1 may be less than about 5% by number for example, about 1% to about 4.5% by number, about 1% to about 4% by number, or about 1% to about 3.5% by number based on 100% by number of the total first positive electrode active material. In such embodiments, the amount of gas generated and the resistance change rate during high-temperature storage are reduced, the capacity recovery rate is increased, the resistance change rate during high-temperature and high-voltage charge/discharge is lowered, and cycle-life characteristics may be significantly improved.

A density of the positive electrode active material layer, i.e., a density of the positive electrode active material layer in a compressed state, may be about 3.2 g/cc to about 3.6 g/cc, for example, about 3.3 g/cc to about 3.6 g/cc, about 3.4 g/cc to about 3.6 g/cc, about 3.45 g/cc to about 3.55 g/cc, or about 3.5 g/cc to about 3.6 g/cc. Here, the density of the positive electrode active material layer means a ratio of the weight to the volume of the positive electrode active material layer in the compressed positive electrode. The density of the positive electrode active material layer may be obtained by measuring a cross-sectional area, thickness, and weight of the positive electrode active material layer excluding the positive electrode current collector, calculating the volume by multiplying the cross-sectional area and thickness, and dividing the weight by the volume. According to some embodiments, the positive electrode may have the high density as described above while also having a low crack occurrence rate of the first positive electrode active material and excellent performance under high-temperature and high-voltage conditions.

A loading level of the positive electrode active material layer may be about 40 mg/cm² to about 70 mg/cm², for example, about 40 mg/cm² to about 60 mg/cm², or about 50 mg/cm² to about 60 mg/cm². A positive electrode including such a positive electrode active material may have improved performance under high-temperature and high-voltage conditions by reducing the crack occurrence rate even at high loading levels as described above.

The loading level may refer to the weight-to-area ratio of the positive electrode's active material layer. In a conventional wet process, electrodes may be fabricated by coating a slurry-composed of active material, solvent and optionally a binder and/or conductive additive-onto the current collector, then drying and rolling it. During slurry application, the loading level is established as a design parameter; it may, for example, be determined by dividing the mass of the active material layer by its cross-sectional area while the slurry remains on the current collector, prior to drying and rolling. A higher loading level indicates that a larger quantity of slurry has been applied, yielding a thicker active material layer. Alternatively, in a dry process, the active material layer is formed on the current collector without a solvent and subsequently rolled; in this context, the loading level may refer to the mass-to-area ratio of the unrolled active material layer.A thickness of the positive electrode active material layer may be about 80 µm to about 400 µm, for example, about 100 µm to about 350 µm, about 100 µm to about 300 µm, about 100 µm to about 250 µm, about 150 µm to about 200 µm, or about 160 µm to about 180 µm. If the thickness of the positive electrode active material layer is in these ranges, a high-capacity and high-energy-density battery may be provided. The thickness of the positive electrode active material layer can be measured from an SEM image of the positive electrode cross-section.

The first positive electrode active material may be in a form of secondary particles that are agglomerations of primary particles. The secondary particles may have a spherical shape, an elliptical spherical shape, a polyhedral shape, or an irregular shape. The primary particles in the secondary particles may have a spherical shape, an elliptical spherical shape, a plate shape, or a combination thereof.

The average particle diameter (D₅₀) of the secondary particles of the first positive electrode active material may be about 8 µm to about 20 µm, for example, about 10 µm to about 18 µm, or about 12 µm to about 15 µm. Here, the average particle diameter (D₅₀) may be obtained by obtaining a particle size distribution for the first positive electrode active material using a particle size analyzer (PSA) and taking the diameter of particles having a cumulative volume of 50 vol% from the particle size distribution as the average particle diameter. When the secondary particles are in these size ranges, the energy density may be increased and the capacity may be increased. Here, the first positive electrode active material may be expressed as large particles.

The grain size of the primary particles in the secondary particles, as measured by X-ray diffraction analysis (XRD), may be about 0.01 µm to about 0.9 µm, for example about 0.01 µm to about 0.7 µm, about 0.01 µm to about 0.5 µm, about 0.01 µm to about 0.3 µm, about 0.05 µm to about 0.2 µm, or about 0.09 µm to about 0.15 µm. If the size of the primary particles in these ranges, the movement of lithium ions may be promoted, thereby improving the charge/discharge efficiency and output characteristics. Further, the crack rate of the secondary particles due to compressing may be reduced, thereby improving the cycle-life characteristics and high-temperature and high-voltage characteristics of the battery.

Herein, the size of the primary particles may refer to a grain size calculated by the Scherrer Equation from the peak full width at half maximum obtained from XRD analysis. Bruker's Powder XRD (D8 Advance) may be used as the XRD measuring equipment, and analysis may be, for example, performed under the following conditions.
**X-ray** wavelength: 1.5406 Å (CuKα)
Slit conditions: Divergence Slit 0.5 °, Scattering Slit 0.5 °, Receiving Slit 0.20 mm
Scan conditions: Continuous Scan, 10 °≤2Θ≤80 °, 0.01 °/step, 1.27 °/min, total measurement time 55 min.

The second positive electrode active material may be in a form of single particles, and the single particles may have a spherical shape, an elliptical spherical shape, a polyhedral shape, or an irregular shape. Herein, the single particles may exist alone without grain boundaries within the particles, be composed of one particle, and may be a single particle, a monolith structure, a one body structure, or a non-agglomerated particle in which particles are not agglomerated with each other but exist as an independent phase in terms of morphology. The single particles may be expressed as a single particle (one body particle, single grain), for example, as a single crystal. The single particles may exist alone, or multiple single particles may be attached together. For example, 2 to 10 single particles may be in contact with each other.

The average particle diameter (D₅₀) of the single particles of the second positive electrode active material may be about 1 µm to about 6 µm, for example, about 1.5 µm to about 5 µm, or about 2 µm to about 4 µm. As discussed above, the average particle diameter (D₅₀) may be obtained by obtaining a particle size distribution using a particle size analyzer for the second positive electrode active material, and taking the diameter of particles having a cumulative volume of 50 vol% in the particle size distribution as the average particle diameter. When the size of the single particles is in these ranges, the energy density may be increased and cycle-life characteristics may be improved. The second positive electrode active material may be expressed as small particles.

Particle size analysis of the secondary particles of the first positive electrode active material and the single particles of the second positive electrode active material may be performed using, for example, a particle size analyzer, LS13320 (Beckmann Coulter), which utilizes laser diffraction. As particle size analysis conditions, the pump speed may be 55%, ultrasonic dispersion may be performed at 40 KHz for 30 seconds, a run length may be 60 seconds, a refractive index may be 1.6, an e-factor may be 1.00, a sample amount may be 0.20 g, and a dispersant added to the sample may be 1 ml of 10% sodium hexametaphosphate. The D₅₀ refers to the size of particles having a cumulative volume of 50 vol% in the particle size distribution.

The first lithium nickel-based composite oxide of the first positive electrode active material and the second lithium nickel-based composite oxide of the second positive electrode active material may be the same or different. The first lithium nickel-based composite oxide and the second lithium nickel-based composite oxide may each be represented by Chemical Formula 1.

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are different elements and are each at least one of Al, B, Ba, Ca, Ce, Cr, Cu, Fe, Mg, Mn, Mo, Nb, Si, Sn, Sr, Ti, V, W, Y, Zn, and Zr, and X is one or more of F, P, and S. In further embodiments of Chemical Formula 1, 0.5≤x1≤0.8, 0.2≤y1≤0.5, and 0≤z1≤0.1, or 0.60≤x1≤0.75, 0.20≤y1≤0.35, and 0.01≤z1≤0.05, or 0.65≤x1≤0.75, 0.25≤y1≤0.35, and 0≤z1≤0.01.

In other examples, the first lithium nickel-based composite oxide and the second lithium nickel-based composite oxide may each be represented by Chemical Formula 2 below. In such a case, the first and second lithium nickel-based composite oxides may be expressed as a layered lithium nickel-manganese-based composite oxide.

[Chemical Formula 2] Liₐ₂Niₓ₂Mn_{y2}M³_{z2}O_{2-b2}X_{b2}

In Chemical Formula 2, 0.9≤a2≤1.8, 0.5≤x2≤0.8, 0.2≤y2≤0.5, 0≤z2≤0.1, 0.9≤x2+y2+z2≤1.1, and 0≤b2≤0.1, M³ is one or more of Al, B, Ba, Ca, Ce, Cr, Cu, Fe, Mg, Mo, Nb, Si, Sn, Sr, Ti, V, W, Y, Zn, and Zr, and X is one or more of F, P, and S.

In Chemical Formula 2, 0.60≤x2≤0.75, 0.20≤y2≤0.35, and 0.01≤z2≤0.05, or 0.65≤x2≤0.75, 0.25≤y2≤0.35, and 0≤z2≤0.01.

As an example, in Chemical Formula 2, M³ may include Al, 0.01≤z2≤0.05, or 0.01≤z2≤0.03.

An amount of nickel based on 100 mol% of the total metal excluding lithium in the first lithium nickel-based composite oxide and an amount of nickel based on 100 mol% of the total metal excluding lithium in the second lithium nickel-based composite oxide may each be about 50 mol% to about 80 mol%, for example, about 50 mol% to about 79 mol%, about 55 mol% to about 79 mol%, about 60 mol% to about 79 mol%, about 60 mol% to about 75 mol%, about 65 mol% to about 75 mol%, about 70 mol% to about 75 mol%, or about 71 mol% to about 75 mol%. The first positive electrode active material and the second positive electrode active material according to some embodiments may be referred to as a mid-nickel-based positive electrode active material.

An amount of manganese based on 100 mol% of the total metal in the first lithium nickel-based composite oxide excluding lithium and an amount of manganese based on 100 mol% of the total metal in the second lithium nickel-based composite oxide excluding lithium may each be about 20 mol% to about 50 mol%, for example, about 20 mol% to about 45 mol%, about 20 mol% to about 40 mol%, about 20 mol% to about 35 mol%, about 21 mol% to about 35 mol%, or about 25 mol% to about 35 mol%. The first positive electrode active material and the second positive electrode active material according to some embodiments may be a layered nickel-manganese-based positive electrode active material containing manganese in an amount of greater than or equal to about 20 mol%.

An amount of cobalt based on 100 mol% of the total metal in the first lithium nickel-based composite oxide excluding lithium and an amount of cobalt based on 100 mol% of the total metal in the second lithium nickel-based composite oxide excluding lithium may each independently be about 0 mol% to about 0.01 mol%, about 0 mol% to about 0.001 mol%, or about 0 mol%. The first positive electrode active material and the second positive electrode active material according to some embodiments may be a low-cobalt or cobalt-free layered nickel-based positive electrode active material.

In some embodiments, the first lithium nickel-based composite oxide includes nickel and manganese and may additionally include aluminum. In these embodiments, the structural stability of the first positive electrode active material under high-temperature and high-voltage conditions may be improved, which may thereby improve the resistance characteristics and cycle-life characteristics. The aluminum may be evenly doped within the secondary particles. The first lithium nickel-based composite oxide may be prepared by using a hydroxide (or oxide) containing nickel, manganese, and aluminum as a precursor, mixing the precursor with a lithium raw material, and firing the mixture. In the first lithium nickel-based composite oxide, an amount of aluminum may be about 1 mol% to about 5 mol%, about 1 mol% to about 4 mol%, or about 1 mol% to about 3 mol%, based on 100 mol% of the total metal excluding lithium. When the amount of aluminum is in these ranges, the structural stability of the first positive electrode active material under high-temperature and high-voltage conditions may be improved and the battery may have improved capacity characteristics.

In examples, based on 100 mol% of the total metal excluding lithium, the first lithium nickel-based composite oxide may include nickel in an amount of about 50 mol% to about 80 mol%, manganese in an amount of about 20 mol% to about 50 mol%, aluminum in an amount of about 0 mol% to about 5 mol%, and cobalt in an amount of about 0 mol% to about 0.01 mol%. In more specific examples, based on 100 mol% of the total metal excluding lithium, the first lithium nickel-based composite oxide may include nickel in an amount of about 60 mol% to about 75 mol%, manganese in an amount of about 20 mol% to about 35 mol%, aluminum in an amount of about 1 mol% to about 5 mol%, and cobalt in an amount of about 0 mol% to about 0.01 mol%. When the first lithium nickel-based composite oxide have such compositions, structural stability at high temperature and high voltage is improved, and accordingly a positive electrode including the first lithium nickel-based composite oxide may have improved capacity characteristics, improved high-temperature storage characteristics, improved capacity, resistance, and improved cycle-life characteristics under high-voltage driving conditions while being economically feasible.

In an example, based on 100 mol% of the total metal excluding lithium, the second lithium nickel-based composite oxide may include about 50 mol% to about 80 mol% of nickel, about 20 mol% to about 50 mol% of manganese, and about 0 mol% to about 0.01 mol% of cobalt. In more specific examples, the second lithium nickel-based composite oxide may include, based on 100 mol% of the total metal excluding lithium, about 65 mol% to about 75 mol% of nickel, about 25 mol% to about 35 mol% of manganese, and about 0 mol% to about 0.01 mol% of cobalt. Such second lithium nickel-based composite oxide compositions have improved structural stability at high temperature and high voltage, and accordingly, a positive electrode including the second lithium nickel-based composite oxide may have improved capacity characteristics, improved high-temperature storage characteristics, and improved capacity, resistance, and cycle-life characteristics under high-voltage driving conditions, while being economically feasible.

According to some embodiments, a first positive electrode active material includes coating layers on secondary particles. The coating layers may include one or more of Al, B, Co, Mg, Mn, Mo, Nb, Si, Sn, Ti, V, W, Y, Zn and Zr. The first lithium nickel-based composite oxide may be a layered lithium nickel-based composite oxide having a mid-nickel composition as described above, which contains greater than or equal to about 20 mol% of manganese and containing almost no cobalt. In such a case, when driven at high temperature and high voltage, electrolyte components may easily attack the first lithium nickel-based composite oxide, and side reactions with the electrolyte may frequently occur. Accordingly, gas generation may increase, which may cause problems such as a decrease in battery cycle-life and safety. The first positive electrode active material according to embodiments solves these problems and secures high structural stability under high-temperature and high-voltage driving conditions by further including the coating layers on the surfaces of the secondary particles of the first lithium nickel-based composite oxide.

The coating layers may include, for example, one or more of Al, B, Co, Ti, and Zr. As a specific example, the coating layers may include Al, Zr, or a combination thereof. The coating layers may include, for example, an oxide of the above-mentioned elements, or may include the above-mentioned elements, lithium, and oxygen.

An amount of the above-mentioned elements (i.e., one or more of Al, B, Co, Ti, and Zr) of the coating layers may be about 0.01 mol% to about 5 mol%, for example, about 0.05 mol% to about 3 mol%, about 0.1 mol% to about 3.0 mol%, about 0.1 mol% to about 2 mol%, about 0.5 mol% to about 1.5 mol%, or about 0.7 mol% to about 1.3 mol%, based on 100 mol% of the total metal in the first positive electrode active material excluding lithium. When the amount of coating layers are in these ranges, good coating layers are formed without a decrease in the capacity of the first positive electrode active material or an increase in resistance, thereby effectively suppressing side reactions with the electrolyte and effectively reducing the amount of gas generated under high-voltage or high-temperature conditions.

The coating layers may be, for example, in a form of films that continuously surround the surfaces of the secondary particles. In other embodiments, the coating layers may be in the form of shells that surround the entire surfaces of the secondary particles. This is distinct from a structure in which only a portion of the surfaces of the secondary particles are coated. The coating layers may be formed to completely cover the surfaces of the secondary particles while being formed with a very thin and uniform thickness. Accordingly, the first positive electrode active material may have improved structural stability without increased resistance or decreased capacity, may effectively suppress side reactions with the electrolyte, may reduce gas generation under high-voltage and high-temperature conditions, and may provide long cycle-life characteristics.

A thickness of each of the coating layers may be about 10 nm to about 500 nm, for example, about 10 nm to about 450 nm, about 10 nm to about 400 nm, about 10 nm to about 350 nm, about 10 nm to about 300 nm, about 10 nm to about 250 nm, about 10 nm to about 200 nm, about 10 nm to about 150 nm, about 10 nm to about 100 nm, about 10 nm to about 50 nm, about 20 nm to about 500 nm, about 30 nm to about 500 nm, or about 40 nm to about 500 nm. For example, the thickness of each of the coating layers may be less than or equal to about 40 nm. When the coating layer thicknesses are in these ranges, the structural stability of the positive electrode active material may be improved without increasing resistance or reducing capacity due to the coating, and side reactions with the electrolyte may be effectively suppressed. The thicknesses of the coating layers may be measured through, for example, SEM, transmission electron microscopy (TEM), time-of-flight secondary ion mass spectrometry (TOF-SIMS), X-ray photoelectron spectroscopy (XPS), or energy-dispersive X-ray spectroscopy (EDS) analysis, and the thickness range of the coating layers may be measured through TEM-EDS line profile.

The coating layers according to some embodiments may have thin and uniform thicknesses at the level of tens to hundreds of nanometers. For example, the deviation in coating layer thickness within one secondary particle of the first positive electrode active material may be less than or equal to about 20%, less than or equal to about 18%, or less than or equal to about 15%. Herein, the deviation in coating layer thickness refers to the coating layer thickness within one positive electrode active material particle. The deviation of the coating layer thickness may be calculated, for example, by measuring the thickness of about 10 points in an electron microscope image of the cross-section of a single positive electrode active material particle to calculate an arithmetic average, and then dividing the absolute value of the difference between one measurement and the arithmetic mean value by the arithmetic mean value and multiplying by 100. The fact that the deviation or standard deviation of the coating layer thickness is in above ranges means that a coating layer of uniform thickness is well formed in the form of a film on the surfaces of the positive electrode active material particles. Accordingly, the structural stability of the positive electrode active material is improved, side reactions with the electrolyte are effectively suppressed, and the increase in resistance or decrease in capacity due to coating can be minimized.

The coating layer may further contain sulfur. The sulfur may be introduced by using sulfate as a coating raw material, and its amount of sulfur is not limited. According to some embodiments, the coating layer may contain, for example, aluminum and optionally contain sulfur, in which case the high voltage characteristics of the positive electrode active material may be improved and cycle-life characteristics may be enhanced.

During the coating layer formation process, the coating elements may diffuse into the secondary particles. Accordingly, the positive electrode active material according to some embodiments may further include a grain boundary coating portion on the surfaces of the primary particles inside the secondary particles. Here, the internal portion of the secondary particles means the entire internal portion excluding the surface of the secondary particles, or may be a region from the surfaces of the secondary particle to the center of the secondary particles at up to about 60 length % of the radius. The grain boundary coating portion is distinct from the coating layers on the surfaces of the secondary particles, and refers to the coating portions formed on the surfaces of the primary particles inside the secondary particles. The presence of a grain boundary coating portion can be confirmed by SEM-EDS analysis of the cross-section of the positive electrode active material. By providing the grain boundary coating portion, the positive electrode active material can become more structurally stable and have improved cycle-life characteristics.

In some examples, the first positive electrode active material may include coating layers disposed on the surfaces of the secondary particles, with the coating layers including aluminum and grain boundary coating portions formed on the surfaces of the primary particles inside the secondary particles and including aluminum. The amount of aluminum in the grain boundary coating portions is not limited, and, for example, the amount of aluminum in the grain boundary coating portions may be less than the amount of aluminum in the coating layers.

According to some embodiments, the second positive electrode active material may further include coating layers on the surfaces of the single particles. The coating layers may include one or more of Al, B, Co, Mg, Mn, Mo, Nb, Si, Sn, Ti, V, W, Y, Zn, and Zr. When the second positive electrode active material further includes the coating layers, cycle-life characteristics under high-temperature and high-voltage driving conditions may be improved.

According to some embodiments, the positive electrode includes about 5 wt% to about 30 wt% of the first positive electrode active material and about 70 wt% to about 95 wt% of the second positive electrode active material. In more specific examples, the positive electrode may include about 5 wt% to about 20 wt% of the first positive electrode active material and about 80 wt% to about 95 wt% of the second positive electrode active material, or may include about 5 wt% to about 10 wt% of the first positive electrode active material and about 90 wt% to about 95 wt% of the second positive electrode active material, or may include about 5 wt% to about 9 wt% of the first positive electrode active material and about 91 wt% to about 95 wt% of the second positive electrode active material. If the ratio of the first positive electrode active material and the second positive electrode active material is as described above, crack occurrence rate of the first positive electrode active material may be reduced, and the high-temperature storage characteristics and cycle-life characteristics and resistance characteristics under high-temperature, high-voltage driving conditions may be improved.

The BET (Brunauer, Emmett, Teller) specific surface area of the total positive electrode active material including the first positive electrode active material and the second positive electrode active material may be about 0.7 m²/g to about 1.5 m²/g, about 0.7 m²/g to about 1.3 m²/g, about 0.7 m²/g to about 1.1 m²/g, or about 0.8 m²/g to about 1.05 m²/g. When the positive electrode active material has a BET specific surface area in these ranges, the capacity, rate capability, and cycle-life characteristics may be improved, and the battery characteristics under high-voltage and high-temperature conditions may be improved.

The BET specific surface area may be measured by a nitrogen gas adsorption method using, for example, a specific surface area measuring device HM model-1208 manufactured by MOUNTECH. In such an example, about 0.3 g of a positive electrode active material sample is heated in a preprocessor in a nitrogen atmosphere at 300 °C for 1 hour, then further preprocessed at 300 °C for 15 minutes in a surface area measuring device, cooled to the temperature of liquid nitrogen, and saturated with a gas containing 30% nitrogen and 70% He. The amount of gas desorbed may be measured by heating to room temperature, and the specific surface area may be calculated from the obtained results using a conventional BET method.

The positive electrode active material layer may further include a binder, a conductive material, or a combination thereof. The binder and conductive material will now be described.

### Binder

The binder improves binding properties of positive electrode active material particles to one another and with a current collector. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to these examples.

### Conductive Material

The conductive material is included to provide electrode conductivity and any electrically conductive material that does not cause an undesirable chemical change may be used as a conductive material. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The amount of the binder and the conductive material may be about 0.5 wt% to about 5 wt% or about 0.5 wt% to about 3 wt% based on 100 wt% of the positive electrode active material layer.

An aluminum thin film may be used as the current collector, but the present disclosure is not limited in this regard.

### Rechargeable Lithium Battery

Some example embodiments provide a rechargeable lithium battery including the aforementioned positive electrode, negative electrode, and electrolyte. As an example, the rechargeable lithium battery may include a positive electrode, a negative electrode, a separator between the positive electrode and the negative electrode, and an electrolyte solution.

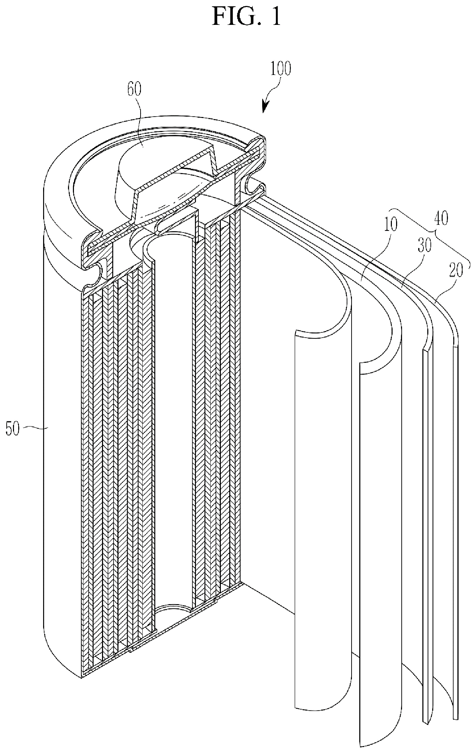

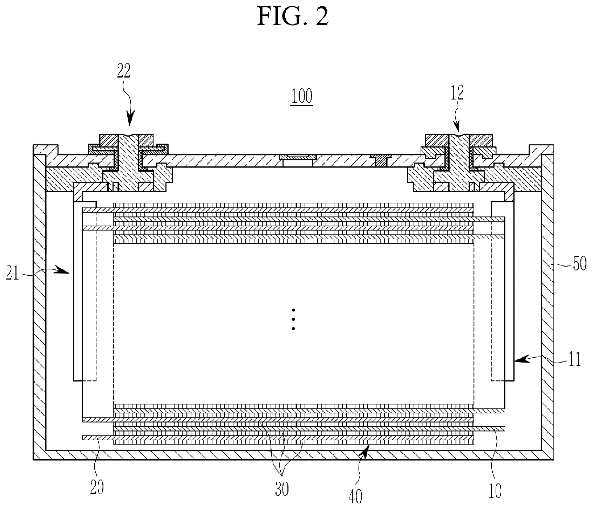

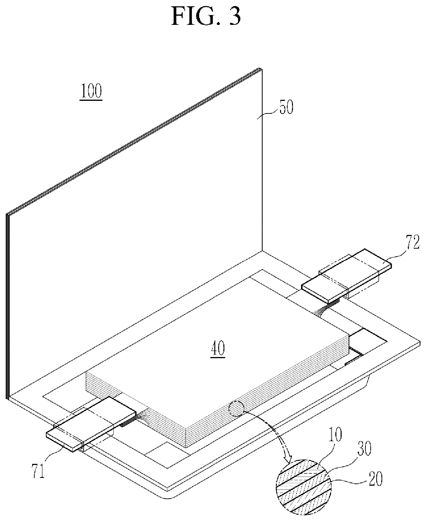

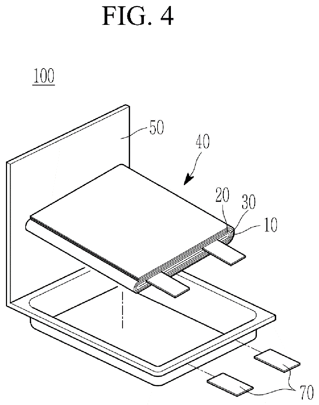

The rechargeable lithium battery may be cylindrical, prismatic, pouch-shaped, coin-shaped, etc. depending on its shape. FIGS. 1 to 4 are schematic views showing rechargeable lithium batteries according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. As shown in in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 may include an electrode tab 70, that is, a positive electrode tab 71 and a negative electrode tab 72 forming as an electrical path for inducing the current formed in the electrode assembly 40 to outside of the battery.

### Negative Electrode

The negative electrode may include a current collector and a negative electrode active material layer on the current collector. The negative electrode active material layer may include a negative electrode active material, and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof. In the formula Si-Q, Q is from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles with amorphous carbon coated on the surfaces of the silicon particles. For example, the silicon-carbon composite may include a secondary particles (core) in which silicon primary particles are assembled and amorphous carbon coating layers (shell) on the surfaces of the secondary particles. The amorphous carbon may also be present between the silicon primary particles, for example, the silicon primary particles may be coated with amorphous carbon. The secondary particles may exist in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, an amount of silicon may be about 10 wt% to about 50 wt% and an amount of amorphous carbon may be about 50 wt% to about 90 wt%, based on 100 wt% of the silicon-carbon composite. When the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%, based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, be in the form of a silicon alloy, or be in an oxidized form. The oxidized form of silicon may be represented by SiOₓ (0<x≤2). The atomic content ratio of Si:O, which indicates a degree of oxidation, may be about 99:1 to about 33:67. As noted above, when a definition is not otherwise provided, an average particle diameter (D₅₀) indicates a diameter of particle where a cumulative volume is about 50 vol% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used that does not cause any undesirable chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The negative electrode current collector may be in the form of a foil, sheet, or foam. A thickness of the negative electrode current collector may be, for example, about 1 µm to about 20 µm, about 5 µm to about 15 µm, or about 7 µm to about 10 µm. The thickness of the negative electrode current collector can be measured from an SEM image of the negative electrode cross-section.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types. When two or more types are used in a mixture, a mixing ratio can be adjusted according to the desired battery performance, as is widely known to those working in the field.

When using a carbonate-based solvent, a cyclic carbonate and a chain carbonate may be mixed and used. The cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ionic conductivity and viscosity. Thus, excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON^{®}, and polytetrafluoroethylene, or a copolymer or a mixture of two or more thereof. The porous substrate may include glass fibers, or may be a membrane in which the polymer and glass fibers are mixed.

The porous substrate may have a thickness of about 1 µm to about 40 µm, for example, about 1 µm to about 30 µm, about 1 µm to about 20 µm, about 5 µm to about 15 µm, or about 10 µm to about 15 µm. The thickness of the porous substrate can be measured from an SEM image of the porous substrate cross-section.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other examples, a coating layer including an organic material and a coating layer including an inorganic material may be stacked.

The thickness of the coating layer may be about 0.5 µm to about 20 µm, for example, about 1 µm to about 10 µm, or about 1 µm to about 5 µm. The thickness of the coating layer can be measured from an SEM image of the coating layer cross-section.

A rechargeable lithium battery according to some example embodiments may have a charge upper limit voltage of 4.4 V or higher, thereby providing high energy density. According to some embodiments, the positive electrode exhibits high stability even under high-voltage driving conditions of 4.4 V or higher, and may thereby exhibit excellent cycle-life characteristics and resistance characteristics.

Additionally, the rechargeable lithium battery may have excellent high-temperature storage characteristics. In a rechargeable lithium battery including a positive electrode according to some example embodiments, a negative electrode including lithium metal, and an electrolyte including a carbonate solvent and a lithium salt, the amount of gas generated by the rechargeable lithium battery after storage at 60 °C for 60 days may be about 25 mL or less, for example, about 0 mL to about 25 mL, about 0 mL to about 24 mL, or about 1 mL to about 20 mL.

Hereinafter, examples and comparative examples are described. However, the present disclosure is not limited to the following examples.

### Example 1

### 1. Preparation of Positive Electrode Active Material

Ni_{0.75}Mn_{0.23}Al_{0.02}(OH)₂ and LiOH were mixed to have a molar ratio of (Ni+Mn+Al):Li = 1:1.05. The mixture was then heat-treated at 845 °C for 8 hours under an oxygen atmosphere to prepare a lithium nickel-manganese-aluminum-based composite oxide containing a first lithium nickel-based composite oxide (LiNi_{0.75}Mn_{0.23}Al_{0.02}O₂) in the form of secondary particles having an average particle diameter (D₅₀) of 13.5 µm.

A coating solution was prepared by adding aluminum sulfate and 600 g of distilled water to a 1 L reactor and then stirring at about 350 rpm for about 5 minutes to dissolve the salt. The coating solution was confirmed to became colorless transparent as the salt was completely dissolved in the coating solution. Subsequently, 500 g of the prepared lithium nickel-manganese-aluminum-based composite oxide was added to the coating solution, while stirring, for 1.5 minutes and then stirred together for 30 minutes. The aluminum sulfate was such that an aluminum content of the coating layer of the first positive electrode active material was 0.8 mol% based on 100 mol% of total metal in a first positive electrode active material excluding lithium.

After removing the solvent from the mixed solution by using an aspirator and a filter press, vacuum-drying was performed at 190 °C to obtain a coated product.

The coated product was secondarily heat-treated at 750 °C for 8 hours under the oxygen atmosphere to thereby prepare the final first positive electrode active material.

A second positive electrode active material in the form of single particles having an average particle diameter (D₅₀) of 4 µm was prepared by mixing Ni_{0.75}Mn_{0.25}(OH)₂ and LiOH to have a molar ratio of (Ni+Mn):Li = 1:1.05, heat-treating the mixture at 790 °C for 12 hours under the oxygen atmosphere, pulverizing the mixture by using a Hosokawa jet mill under conditions of Blower 35 Hz, AFG 8000 rpm, and Air 4 kgf/cm², and secondarily heat-treating the product at 660 °C for 16 hours under the oxygen atmosphere.

The first positive electrode active material and the second positive electrode active material were mixed in a weight ratio of 30:70 to prepare the positive electrode active material. The positive electrode active material was confirmed to have a BET specific surface area of 0.823 m²/g.

### 2. Manufacturing of Positive Electrode

98.5 wt% of the prepared positive electrode active material, 1.0 wt% of a polyvinylidene fluoride binder, and 0.5 wt% of a carbon nanotube conductive material were mixed to prepare a positive electrode active material layer slurry. The slurry was coated on an aluminum foil as a current collector at a loading level of 55 mg/cm², dried, and then compressed to form a positive electrode active material layer having density of 3.4 g/cc, thereby making a positive electrode.

### 3. Manufacture of Rechargeable Lithium Battery Cell

A polytetrafluoroethylene separator was disposed between the positive electrode and a lithium metal negative electrode to make an assembly and put it in a case. An electrolyte solution, which was prepared by mixing ethylene carbonate and dimethyl carbonate in a volume ratio of 3:7 and dissolving 1 M LiPF₆ in the mixed solvent, was injected into the caseto make a rechargeable lithium battery cell.

### Example 2

A positive electrode and a rechargeable lithium battery cell were made in the same manner as in Example 1, except that the positive electrode active material was prepared by mixing the first positive electrode active material and the second positive electrode active material in a weight ratio of 10:90. The positive electrode active material of Example 2 was confirmed to have a BET specific surface area of 1.027 m²/g.

### Comparative Example 1

A positive electrode and a rechargeable lithium battery cell were made in the same manner as in Example 1, except that the first positive electrode active material alone was used without the second positive electrode active material, and the compression was performed to form a positive electrode active material layer with density of 3.2 g/cc. The positive electrode active material of Comparative Example 1 was confirmed to have a BET specific surface area of 0.216 m²/g.

### Comparative Example 2

A positive electrode and a rechargeable lithium battery cell were made in the same manner as in Example 1, except that the second positive electrode active material alone was used without using the first positive electrode active material, and the compression was performed to form a positive electrode active material layer with density of 3.3 g/cc. The positive electrode active material of Comparative Example 2 was confirmed to have a BET specific surface area of 1.109 m²/g.

### Comparative Example 3

A positive electrode and a rechargeable lithium battery cell were made in in the same manner as in Example 1, except that the positive electrode active material was prepared by mixing the first positive electrode active material and the second positive electrode active material in a weight ratio of 70:30, and the compression was performed to form a positive electrode active material layer with density of 3.5 g/cc. The positive electrode active material of Comparative Example 3 was confirmed to have a BET specific surface area of 0.453 m²/g.

### Comparative Example 4

A positive electrode and a rechargeable lithium battery cell were made in the same manner as in Example 1, except that the positive electrode active material was prepared by mixing the first positive electrode active material and the second positive electrode active material in a weight ratio of 60:40, and the compression was performed to form a positive electrode active material layer with density of 3.5 g/cc. The positive electrode active material of Comparative Example 4 was confirmed to have a BET specific surface area of 0.553 m²/g.

### Comparative Example 5

A positive electrode and a rechargeable lithium battery cell were made in the same manner as in Example 1, except that the positive electrode active material was prepared by mixing the first positive electrode active material and the second positive electrode active material in a weight ratio of 50:50, and the compression was performed to form a positive electrode active material layer with density of 3.5 g/cc. The positive electrode active material of Comparative Example 5 was confirmed to have a BET specific surface area of 0.628 m²/g.

### Evaluation 1: Crack Rate of First Positive Electrode Active Material

Cross-sections of the positive electrodes according to Examples 1 and 2 and Comparative Examples 1 and 3 to 5 was milled using Broad Ion Beam (BIB; IM4000PLUS, Hitachi High-Tech Inc.; 6 kV, 1 hr). The positive electrode cross-sections were taken images of with SEM (Helios G4 HX, Thermo Fisher Scientific Inc.; 3 kV, 0.8 nA BSE), and the images are shown in FIG. 5. An Avizo image program was used to remove the second positive electrode active material, small particles, but separate the first positive electrode active material, large particles, which were marked, as shown in the bottom image of FIG. 5. Subsequently, as shown in FIG. 14, the image program was used to obtain a cross-sectional area a of the other region excluding a region where cracks occurred in a cross-section of one secondary particle. This was then used to obtain a theoretical circumference (P₀). Further, an outer circumference b including the region where the crack occurred in the same secondary particle cross-section and a circumference c of the crack occurred inside the particle were measured to obtain a sum of "b+c" as an actual circumference (P). P₀ and P were substituted into Equation 1 to calculate a crack rate of the corresponding secondary particle.

All of the secondary particles in the SEM image of the positive electrode cross-section were calculated with respect to the crack rate in this way. The % by number of the first positive electrode active material satisfying 60% or more of the crack rate of Equation 1 based on 100% by number of all the secondary particles in the positive electrode cross-section were calculated, and the results are shown in Table 1 below and at the left of FIG. 10. In addition, % by number of the first positive electrode active material satisfying 70% or more of the crack rate of Equation 1 based on the total number of secondary particles in the positive electrode cross-section was calculated, and the results are shown in Table 1 below and at the right of FIG. 10.

**Table 1**

| | First positive electrode active material (wt%) | Second positive electrode active material (wt%) | Proportion of large particles having a crack rate of greater than or equal to 60% | Proportion of large particles having a crack rate of greater than or equal to 70% |
|---|---|---|---|---|
| Comparative Example 1 | 100 | - | 70.51 | 68.20 |
| Comparative Example 3 | 70 | 30 | 45.73 | 40.95 |
| Comparative Example 4 | 60 | 40 | 36.36 | 33.81 |
| Comparative Example 5 | 50 | 50 | 30.94 | 30.63 |
| Example 1 | 30 | 70 | 25.84 | 23.03 |
| Example 2 | 10 | 90 | 5.26 | 2.63 |

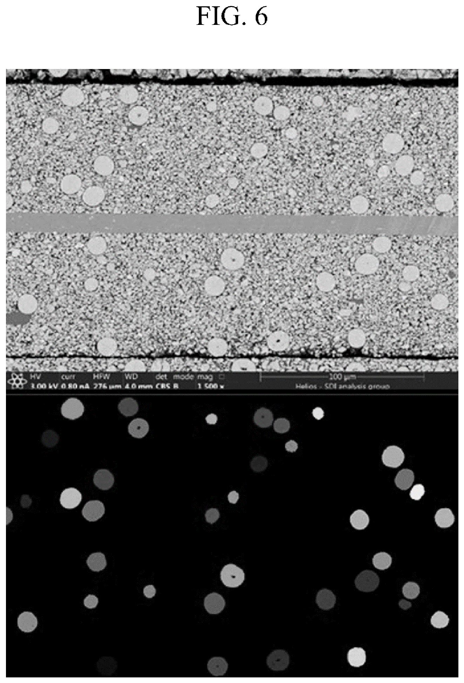

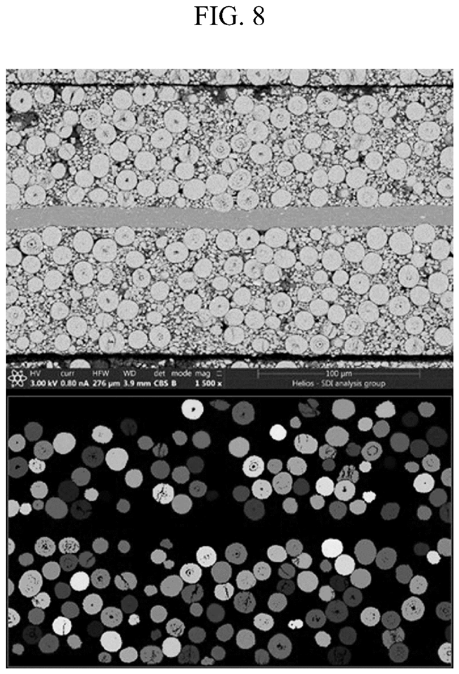

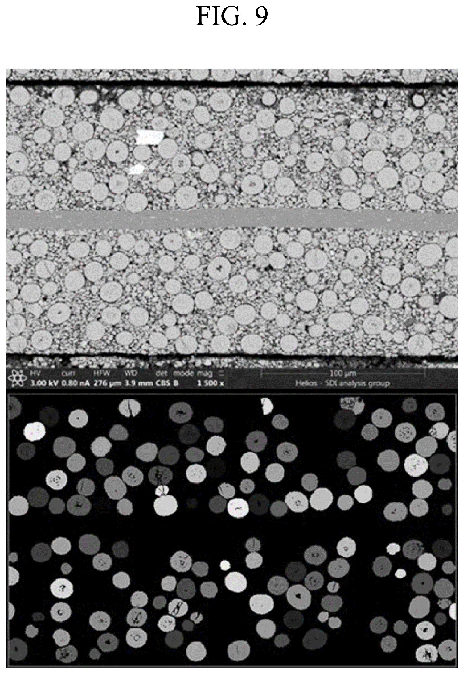

FIG. 5 is a SEM image (top) of the positive electrode cross-section of Example 1 and an image (bottom) where the secondary particles alone corresponding to the first positive electrode active material were marked using the Avizo image program. FIGS. 6, 7, 8, and 9 show images of Example 2, Comparative Example 3, Comparative Example 4, and Comparative Example 5 in order, where the SEM image (top) shows the positive electrode cross-section, and the image (bottom) shows only the secondary particles corresponding to the first positive electrode active material, which are marked using the Avizo image program.

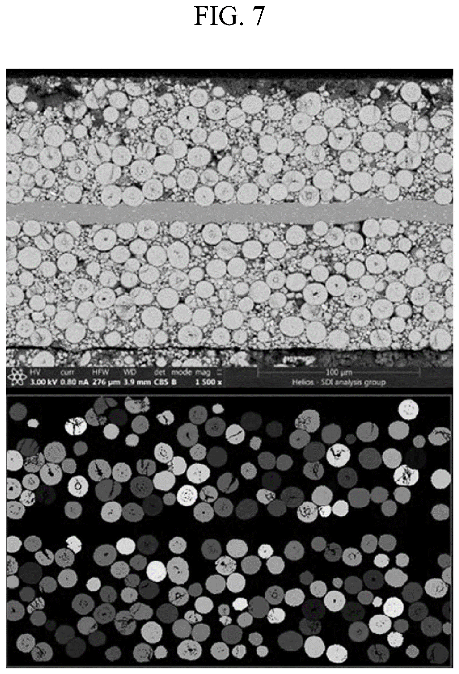

Referring to FIGS. 5 to 9, compared to Comparative Examples 3 to 5 shown in FIGS. 7 to 9, Examples 1 and 2 of FIGS. 5 and 6 were confirmed to exhibit that the large particles were less cracked. In particular, Example 2, in which 90 wt% of the second positive electrode active material was mixed, was confirmed to exhibit that the large particles were much less cracked after the compression.

Referring to Table 1, unlike the comparative examples, Examples 1 and 2 had less than 30% by number of the first positive electrode active material with a crack rate of greater than or equal to 60% and less than 25% by number of the first positive electrode active material with a crack rate of greater than or equal to 70%. In particular, Example 2 had less than 10% by number of the first positive electrode active material with a crack rate of greater than or equal to 60% and less than 5% by number of the first positive electrode active material with a crack rate of greater than or equal to 70%. Accordingly, as compared to the comparative examples, the first positive electrode active material of the examples exhibited a significantly reduced crack rate due to the compression.

### Evaluation 2: Gas Generation Rate during High-temperature Storage

The rechargeable lithium battery cells of Examples 1 and 2 and Comparative Examples 1 and 3 to 5 in SOC (state of charge) 100% were stored at a high temperature of 60 °C for 60 days to measure an amount of gas generated, and the results are shown in FIG. 11. The gas generation amount was measured by punching the rechargeable lithium battery cells in a vacuum chamber at 25 °C to measure a pressure difference.

Referring to FIG. 11, Examples 1 and 2 exhibited a gas generation rate of 25 mL or less when stored at the high temperature, particularly, Example 2 had a gas generation rate of 20 mL or less. Accordingly, as compared to the comparative examples, Examples 1 and 2 exhibited a much reduced gas generation rate when stored at the high temperature.

### Evaluation 3: Capacity Recovery Rate and DC-IR Change Rate during High-temperature Storage

The rechargeable lithium battery cells of Examples 1 and 2 and Comparative Examples 1 and 3 to 5 were charged to an upper limit voltage of 4.4 V at a constant current of 0.33 C and to 0.05 C at the constant voltage and then discharged to a cut-off voltage of 2.8 V at 0.33 C at 25 °C for initial charge and discharge. Subsequently, each of the battery cells was stored at the high temperature of 60 °C for 120 days and then subjected to a reference performance test (RPT) at 25 °C and 0.33 C-rate every specific number of days (30 days) to measure a capacity recovery rate and a DC internal resistance (DC-IR) change rate. The results are shown in FIG. 12.

In the thick upper graphs of FIG. 12, the left vertical axis represents the capacity recovery rate, wherein the capacity recovery rate refers to a ratio of discharge capacity at 0.33 C-rate within a range of 2.8 V to 4.4 V at 25 °C after the storage at 60 °C to the initial discharge capacity. In the thihn lower graphs of FIG. 12, the right vertical axis represents the DC-IR change rate, wherein the DC-IR change rate refers to a ratio of DC-IR after cycles at 0.33 C-rate within a range of 2.8 V to 4.4 V at 25 °C after the storage at 60 °C to DC-IR after the initial charge and discharge.

Referring to FIG. 12, as compared to the comparative examples, Examples 1 and 2 exhibited a much higher capacity recovery rate but a much lower DC-IR change rate when stored for 120 days. Accordingly, the rechargeable lithium battery cells of the examples exhibited much better high temperature characteristics.

### Evaluation 4: High-temperature Cycle-life Characteristics

The rechargeable lithium battery cells of Examples 1 and 2 and Comparative Examples 1 and 3 to 5, which proceeded with the same initial charge and discharge as in Evaluation 3, were repeatedly charged and discharged for 300 cycles at 0.5 C within a voltage range of 2.8 V to 4.4 V at 45 °C. A capacity retention rate according to the number of cycles was obtained as a ratio of discharge capacity at each cycle to the initial discharge capacity. The results are shown as the thick upper graphs in FIG. 13. In addition, a DC-IR change rate according to the number of cycles was obtained as a ratio of DC-IR after each cycle at a high temperature to DC-IR after the initial charge and discharge. The results are shown as the thin lower graphs in FIG. 13.

Referring to FIG. 13, as compared to the comparative examples, Examples 1 and 2 exhibited a much higher capacity retention rate at the 300 cycles and a much lower DC-IR change rate at the 300 cycles. Accordingly, the examples exhibited much improved high temperature cycle-life characteristics as compared to the comparative examples.

While this disclosure has been described in connection with what is presently considered to be practical example embodiments, it is to be understood that the disclosure is not limited to the disclosed embodiments. On the contrary, the disclosure includes various modifications and equivalent arrangements.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode comprising:
a positive electrode current collector;
a positive electrode active material layer on the positive electrode current collector,
wherein the positive electrode active material layer comprises:
a first positive electrode active material comprising a first lithium nickel-based composite oxide in a form of secondary particles that are agglomerations of primary particles, and a coating layer disposed on each of the secondary particles, and with the coating layers including one or more of Al, B, Co, Mg, Mn, Mo, Nb, Si, Sn, Ti, V, W, Y, Zn, and Zr, and
a second positive electrode active material comprising a second lithium nickel-based composite oxide in a form of single particles,
wherein an average particle diameter (D₅₀) of the secondary particles of the first positive electrode active material is greater than an average particle diameter (D₅₀) of the single particles of the second positive electrode active material,
wherein, based on a total of 100 wt% of the first positive electrode active material and the second positive electrode active material, the first positive electrode active material is included in an amount of 5 wt% to 30 wt%, and the second positive electrode active material is included in an amount of 70 wt% to 95 wt%, and
wherein a proportion of the first positive electrode active material having a crack rate of greater than or equal to 60% in the following equation is less than 30% by number based on a total 100% by number of the first positive electrode active material: $Crack rate = \left(P-{P}_{0}\right) / {P}_{0} \times 100$ where P₀ is obtained by selecting a secondary particle of the first positive electrode active material in a SEM image of a cross-section of the positive electrode, calculating the cross-sectional area of the secondary particle, and calculating the theoretical circumference therefrom, and P is obtained by selecting a secondary particle of the first positive electrode active material in the SEM image of the positive electrode cross-section and adding the inner circumference due to the crack to the outer circumference of the positive electrode active material to calculate an actual circumference.

2. The positive electrode as claimed in claim 1, wherein a ratio of the first positive electrode active material having a crack rate of greater than or equal to 60% in the equation is 1% to 26% by number based on 100% by number of the total first positive electrode active material,
and wherein preferably a proportion of the first positive electrode active material having a crack rate of greater than or equal to 70% in the equation is less than 25% by number based on 100% by number of the total first positive electrode active material.

3. The positive electrode as claimed in claim 1 or claim 2, wherein, based on a total of 100 wt% of the first positive electrode active material and the second positive electrode active material, the first positive electrode active material is included in an amount of 5 wt% to 20 wt%, and the second positive electrode active material is included in an amount of 80 wt% to 95 wt%, and
wherein a proportion of the first positive electrode active material having a crack rate of greater than or equal to 60% in the equation is less than 10% by number based on 100% by number of the total first positive electrode active material,
and wherein preferably, based on a total of 100 wt% of the first positive electrode active material and the second positive electrode active material, the first positive electrode active material is included in an amount of 5 wt% to 20 wt%, and the second positive electrode active material is included in an amount of 80 wt% to 95 wt%, and
wherein a proportion of the first positive electrode active material having a crack rate of greater than or equal to 70% in the equation is less than 5% by number based on 100% by number of the total first positive electrode active material.

4. The positive electrode as claimed in any one of claims 1-3, wherein a loading level of the positive electrode active material layer is 40 mg/cm² to 70 mg/cm², and
wherein a thickness of the positive electrode active material layer is 80 µm to 400 µm.

5. The positive electrode as claimed in any one of claims 1-4, wherein an average particle diameter (D₅₀) of the secondary particles of the first positive electrode active material is 8 µm to 20 µm, and
wherein an average particle diameter (D₅₀) of the single particles of the second positive electrode active material is 1 µm to 6 µm.

6. The positive electrode as claimed in any one of claims 1-5, wherein, as measured by X-ray diffraction analysis (XRD), a size of the primary particles in the secondary particles is 0.01 µm to 0.9 µm.

7. The positive electrode as claimed in any one of claims 1-6, wherein the first lithium nickel-based composite oxide and second lithium nickel-based composite oxide are each represented by:
Liₐ₁Niₓ₁M¹_{y1}M²_{z1}O_{2-b1}X_{b1}
where 0.9 ≤ a1 ≤ 1.8, 0.3 ≤ x1 ≤ 1, 0 ≤ y1 ≤ 0.7, 0 ≤ z1 ≤ 0.7, 0.9 ≤ x1 +y1 +z1 ≤ 1.1, and 0 ≤ b1 ≤ 0.1, M¹ and M² are different and are each one or more of Al, B, Ba, Ca, Ce, Cr, Cu, Fe, Mg, Mn, Mo, Nb, Si, Sn, Sr, Ti, V, W, Y, Zn, and Zr, and X is one or more of F, P, and S.

8. The positive electrode as claimed in any one of claims 1-7, wherein the first lithium nickel-based composite oxide and second lithium nickel-based composite oxide are each represented by:
Liₐ₂Niₓ₂Mn_{y2}M³_{z2}O_{2-b2}X_{b2}
wherein 0.9 ≤ a2 ≤ 1.8, 0.5 ≤ x2 ≤ 0.8, 0.2 ≤ y2 ≤ 0.5, 0 ≤ z2 ≤ 0.1, 0.9 ≤ x2+y2+z2 ≤ 1.1, and 0 ≤ b2 ≤ 0.1, M³ is one or more of Al, B, Ba, Ca, Ce, Cr, Cu, Fe, Mg, Mo, Nb, Si, Sn, Sr, Ti, V, W, Y, Zn, and Zr, and X is one or more of F, P, and S.

9. The positive electrode as claimed in any one of claims 1-8, wherein, based on 100 mol% of a total metal excluding lithium, the first lithium nickel-based composite oxide comprises:
50 mol% to 80 mol% of nickel,
20 mol% to 50 mol% of manganese,
0 mol% to 5 mol% of aluminum, and
0 mol% to 0.01 mol% of cobalt,
and wherein preferably, based on 100 mol% of a total metal excluding lithium, the first lithium nickel-based composite oxide comprises:
60 mol% to 75 mol% of nickel,
20 mol% to 35 mol% of manganese,
1 mol% to 5 mol% of aluminum, and
0 mol% to 0.01 mol% of cobalt.

10. The positive electrode as claimed in any one of claims 1-9, based on 100 mol% of a total metal excluding lithium, the second lithium nickel-based composite oxide comprises:
50 mol% to 80 mol% of nickel,
20 mol% to 50 mol% of manganese, and
0 mol% to 0.01 mol% of cobalt,
and wherein preferably, based on 100 mol% of a total metal excluding lithium, the second lithium nickel-based composite oxide comprises:
65 mol% to 75 mol% of nickel,
25 mol% to 35 mol% of manganese, and
0 mol% to 0.01 mol% of cobalt.

11. The positive electrode as claimed in any one of claims 1-10, wherein the second positive electrode active material further comprises coating layers on the surfaces of the single particles, and
wherein the coating layers comprise one or more of Al, B, Co, Mg, Mn, Mo, Nb, Si, Sn, Ti, V, W, Y, Zn, and Zr.

12. The positive electrode as claimed in any one of claims 1-11, wherein a BET specific surface area of a total positive electrode active material including the first positive electrode active material and the second positive electrode active material is 0.7 m²/g to 1.5 m²/g.

13. A rechargeable lithium battery comprising:
the positive electrode as claimed in any one of claims 1-12,
a negative electrode, and
an electrolyte.

14. The rechargeable lithium battery as claimed in claim 13, wherein the negative electrode comprises a lithium metal,
wherein the electrolyte comprises a carbonate-based solvent and a lithium salt, and
wherein the rechargeable lithium battery is configured such an amount of gas generated is less than or equal to 25 mL after storage at 60 °C for 60 days.

15. The rechargeable lithium battery as claimed in claim 13 or claim 14, wherein a charge upper limit voltage of the rechargeable lithium battery is 4.4 V or higher.
